# EUROPEAN PATENT APPLICATION

(11) **EP 2 065 292 A2**
(43) Date of publication of application: **03.06.2009**
(21) Application number: 08019630.6
(22) Date of filing: 10.11.2008
(51) Int. Cl.: B62D 5/04

(54) **Variable ratio steering apparatus**

(30) Priority: 30.11.2007 JP 2007310060
(71) Applicant: FUJI KIKO Co., Ltd., Kosai-shi, Shizuoka 431-0431 (JP)
(72) Inventor: Inoue, Kyoichi, Kosai-shi Shizuoka 431-0431 (JP)
(74) Representative: Grünecker, Kinkeldey, Stockmair & Schwanhäusser Anwaltssozietät

(57) **Abstract**

A variable ratio steering apparatus including an input shaft, an output shaft, a rotation speed increasing/reducing mechanism, a motor and a drive shaft that is driven by the motor. The rotation speed increasing/reducing mechanism includes an input gear with first internal teeth, an output gear with second internal teeth, a first planetary gear with first external teeth, a second planetary gear with second external teeth, a cylindrical member connecting the first and second planetary gears, and a rotary cam that is rotatively driven by the motor through the drive shaft to thereby turn the first and second planetary gears about a common rotation center of the input and output gears, so that a first meshing portion between the first external teeth and the first internal teeth and the second meshing portion between the second external teeth and the second internal teeth are allowed to displace in the circumferential direction.

## Description

### BACKGROUND OF THE INVENTION

The present invention relates to a variable ratio steering apparatus, and particularly to a variable ratio steering apparatus that is reduced in axial length thereof.

Vehicles employ a variable ratio steering apparatus for varying a ratio of steer angle at steered road wheels to steering wheel rotation angle in accordance with a traveling speed of the vehicles.

Japanese Patent Application First Publication No. 2000-211541 discloses a variable ratio steering apparatus that is provided on an intermediate shaft that connects as steering shaft with a steering wheel and a pinion shaft of a steering mechanism. The pinion shaft (output shaft) has a ring formed with internal teeth. The steering shaft (input shaft) is connected with an elastically deformable cylindrical flexible spline having external teeth on an outer circumferential surface thereof which are smaller in number than the internal teeth. An elliptic cam is disposed inside the flexible spline. The flexible spline is meshed with the internal teeth of the ring at two portions spaced from each other at an interval of 180 degrees in a circumferential direction of the flexible spline. The mutually meshing portions between the external teeth of the flexible spline and the internal teeth of the ring are moveable in the circumferential direction of the flexible spline upon driving the cam by a drive motor. When the cam is rotationally driven by the drive motor, the mutually meshing portions between the external teeth of the flexible spline and the internal teeth of the ring are displaced so that the pinion shaft is rotated relative to the steering shaft by a difference in number of teeth between the external teeth on a side of the steering shaft and the internal teeth on a side of the pinion shaft during one rotation of the cam. The steering shaft is rotated relative to the pinion shaft in a rotational direction reverse to the rotational direction of the cam by the difference in number of teeth between the external teeth and the internal teeth during the once rotation of the cam. By changing the rotational direction and the rotation number of the cam, it is possible to increase and decrease a difference in relative rotation number between the steering shaft and the pinion shaft. That is, the rotation number of the pinion shaft relative to the rotation number of the steering shaft can be changed by varying the rotational direction and the rotation number of the motor.

### SUMMARY OF THE INVENTION

However, in the variable ratio steering apparatus of the above-described conventional art, a steering assist motor and a transmission ratio varying mechanism are disposed within a cylindrical housing connected with the steering shaft along an axial direction of the steering shaft. Due to this arrangement, a dimension of the steering apparatus in the axial direction of the steering shaft is increased to thereby cause deterioration in installability of the steering apparatus relative to the vehicle.

It is an object of the present invention to solve the above-described problem in the technique of the conventional art and to provide a variable ratio steering apparatus that has a reduced axial length and serves for enhancing installability of the variable ratio steering apparatus relative to the vehicle.

In one aspect of the present invention, there is provided a variable ratio steering apparatus for a vehicle including a steering wheel and a steering mechanism with a pinion shaft, the variable ratio steering apparatus comprising:
an input shaft adapted to be connected to the steering wheel, an output shaft arranged coaxially with the input shaft, the output shaft being adapted to be connected to the pinion shaft of the steering mechanism,
a rotation speed increasing/reducing mechanism that acts to vary a rotation number of the output shaft with respect to a rotation number of the input shaft, the rotation speed increasing/reducing mechanism being disposed between an axial end portion of the input shaft and an axial end portion of the output shaft which are opposed to each other in an axial direction of the input shaft and the output shaft, the rotation speed increasing/reducing mechanism comprising:
   an input gear that is disposed on the axial end portion of the input shaft and formed with first internal teeth on an inner circumferential surface of the input gear;
   an output gear that is disposed on the axial end portion of the output shaft and formed with second internal teeth on an inner circumferential surface of the output gear, the output gear and the input gear having a common rotation center,
   a first planetary gear formed with first external teeth that are meshed with the first internal teeth to form a first meshing portion, the first external teeth being smaller in number of teeth than the first internal teeth so as to provide a first speed reducing ratio between the first external teeth and the first internal teeth,
   a second planetary gear formed with second external teeth that are meshed with the second internal teeth to form a second meshing portion, the second external teeth being smaller in number of teeth than the second internal teeth so as to provide a second speed reducing ratio between the second external teeth and the second internal teeth, the second speed reducing ratio being set to a value different from a value of the first speed reducing ratio,
   a cylindrical member through which the first planetary gear and the second planetary gear are integrally connected to each other; and
   an annular rotary cam disposed between the first planetary gear and the second planetary gear and formed with an eccentric cam hole that has a center offset from the common rotation center of the input gear and the output gear, the cylindrical member being fitted into the rotary cam through the eccentric cam hole,
a motor that is disposed on a radial outside of the rotation speed increasing/reducing mechanism and controls the rotation speed increasing/reducing mechanism; and
a drive shaft that is rotatively driven by the motor, the drive shaft being formed into a hollow cylinder shape and surrounding the rotation speed increasing/reducing mechanism,
   wherein the rotary cam is rotatively driven by the motor through the drive shaft to thereby turn the first planetary gear and the second planetary gear about the common rotation center of the input gear and the output gear, so that the first meshing portion and the second meshing portion are allowed to displace in a circumferential direction of the first planetary gear and the second planetary gear.

The other objects and features of this invention will become understood from the following description with reference to the accompanying drawings.

### BRIEF DESCRIPTION OF THE DRAWINGS

FIG. 1 is a cross section of a variable ratio steering apparatus of a first embodiment according to the present invention, taken in an axial direction of the variable ratio steering apparatus.

FIG. 2 is a partly fragmentary perspective view of the variable ratio steering apparatus of the first embodiment.

FIG. 3 is an exploded perspective view of the variable ratio steering apparatus of the first embodiment.

FIG. 4 is a view of the variable ratio steering apparatus of the first embodiment, when viewed in a direction of arrow E of FIG. 1.

FIG. 5 is a partly fragmentary perspective view of an essential part of the variable ratio steering apparatus of the first embodiment.

FIG. 6A is a view of the essential part of the variable ratio steering apparatus of the first embodiment, taken along line 6A-6A of FIG. 1, and FIG. 6B is a view of the essential part of the variable ratio steering apparatus of the first embodiment, taken along line 6B-6B of FIG. 1.

FIG. 7A is a view of the essential part of the variable ratio steering apparatus of the first embodiment, when viewed along line 7A-7A of FIG. 1, and FIG. 7B is a view of the essential part of the variable ratio steering apparatus of the first embodiment, when viewed along line 7B-7B of FIG. 1.

FIG. 8 is a partly sectional front view of the variable ratio steering apparatus of a second embodiment.

FIG. 9 is a partly sectional side view of the variable ratio steering apparatus of the second embodiment.

FIG. 10 is an exploded perspective view of the variable ratio steering apparatus of the second embodiment.

### DETAILED DESCRIPTION OF THE INVENTION

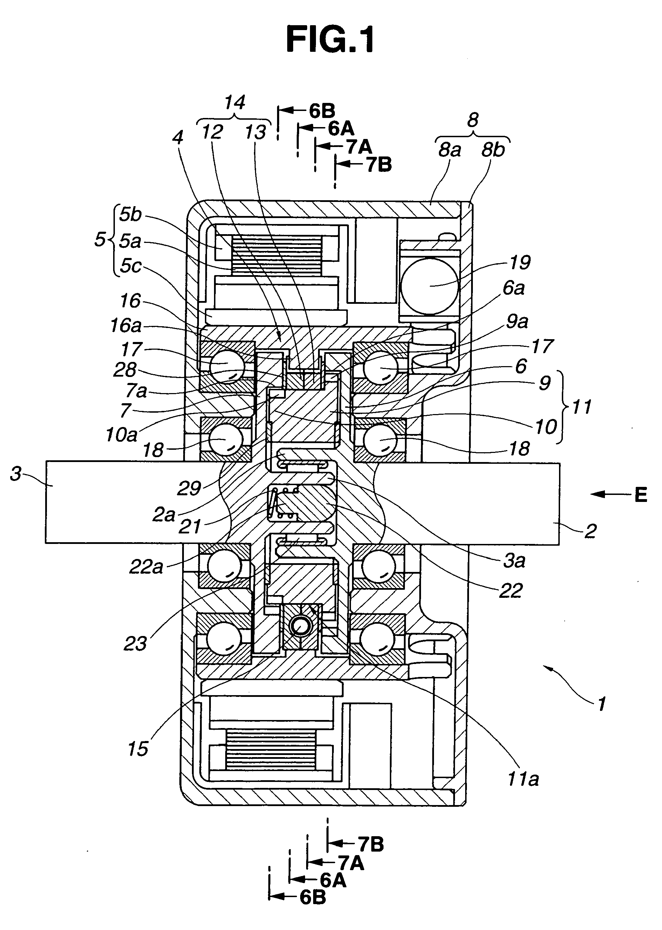

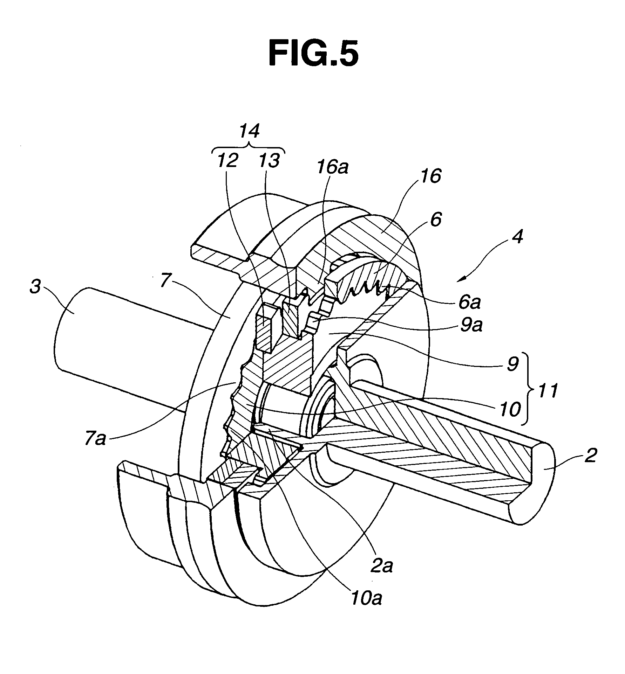

The following describes a variable ratio steering apparatus, hereinafter referred to merely as a steering apparatus, of a first embodiment of the present invention with reference to FIG. 1 to FIG. 7. For ease of understanding, various directional terms, such as upper, lower, rightward and the like are used in the description. However, such terms are to be understood with respect to only a drawing or drawings on which a corresponding part or portion is shown.

As shown in FIG. 1 to FIG. 3, steering apparatus 1 of the first embodiment includes input shaft 2 and output shaft 3 which are arranged coaxially with each other. Input shaft 2 is connected to a steering wheel, not shown, as a steering member. Output shaft 3 is connected to a pinion shaft, not shown, in a rack and pinion steering mechanism. Rotation speed increasing/reducing mechanism 4 is disposed between end portions of input shaft 2 and output shaft 3 which are opposed to each other in an axial direction of input shaft 2 and output shaft 3. Rotation speed increasing/reducing mechanism 4 is so constructed as to surround the opposed end portions of input shaft 2 and output shaft 3, and acts to increase and reduce a rotation speed of output shaft 3 with respect to a rotation speed of input shaft 2. Motor 5 that controls rotation speed increasing/reducing mechanism 4 is disposed on a radial outside of rotation speed increasing/reducing mechanism 4. Drive shaft 16 that is driven by motor 5 is disposed on the radial outside of rotation speed increasing/reducing mechanism 4 so as to surround rotation speed increasing/reducing mechanism 4.

Rotation speed increasing/reducing mechanism 4 includes input gear 6 integrally formed with the end portion of input shaft 2, and output gear 7 integrally formed with the end portion of output shaft 3. Input gear 6 and output gear 7 have a common rotation center, namely, a common rotation axis, about which input gear 6 and output gear 7 are rotatable. Input gear 6 and output gear 7 are formed into generally disk-shapes, respectively, and have annular recessed portions on opposed surfaces thereof which are opposed to each other in an axial direction of input gear 6 and output gear 7, namely, in the axial direction of input shaft 2 and output shaft 3. Input gear 6 and output gear 7 have first internal teeth 6a and second internal teeth 7a on inner circumferential surfaces of the recessed portions, respectively. The common rotation center of input gear 6 and output gear 7 is placed at a center of both a root circle of first internal teeth 6a and a root circle of second internal teeth 7a.

Housing 8 is so disposed as to enclose rotation speed increasing/reducing mechanism 4, motor 5 and drive shaft 16. Housing 8 includes generally cylindrical body 8a having an open end, and generally disk-shaped cover 8b connected with the open end of body 8a. Housing 8 is coupled to a vehicle body. Input shaft 2 and output shaft 3 are rotatably supported on housing 8 through a pair of bearings 18. Bearings 18 are disposed on input shaft 2 and output shaft 3 adjacent to input gear 6 and output gear 7 in the axial direction of input shaft 2 and output shaft 3. One of bearings 18 includes an inner race having an axial end surface that is in contact with an axial end surface of input gear 6. The other of bearings 18 includes an inner race having an axial end surface that is in contact with an axial end surface of output gear 7.

First planetary gear 9 and second planetary gear 10 are disposed between input gear 6 and output gear 7 in the axial direction of input gear 6 and output gear 7.
First planetary gear 9 is formed with first external teeth 9a meshed with first internal teeth 6a of input gear 6. Second planetary gear 10 is formed with second external teeth 10a meshed with second internal teeth 7a of output gear 7. First planetary gear 9 and second planetary gear 10 are integrally connected to each other through cylindrical member 11a that is disposed concentrically with first planetary gear 9 and second planetary gear 10 therebetween. First planetary gear 9, second planetary gear 10 and cylindrical member 11a constitute axially elongated planetary gear unit 11. Planetary gear unit 11 is interposed between input gear 6 and output gear 7 through small-diameter resin collars 29 that are disposed between input gear 6 and planetary gear unit 11 and between output gear 7 and planetary gear unit 11, respectively. The number of first external teeth 9a of first planetary gear 9 is smaller by one or two than the number of first internal teeth 6a of input gear 6. In this embodiment, the number of first internal teeth 6a of input gear 6 is 32, and the number of first external teeth 9a of first planetary gear 9 is 30 that is smaller by two than the number of first internal teeth 6a of input gear 6. Similarly, the number of second external teeth 10a of second planetary gear 10 is smaller by one or two than the number of second internal teeth 7a of output gear 7. In this embodiment, the number of second internal teeth 7a of output gear 7 is 25, and the number of second external teeth 10a of second planetary gear 10 is 23 that is smaller by two than the number of second internal teeth 7a of output gear 7.

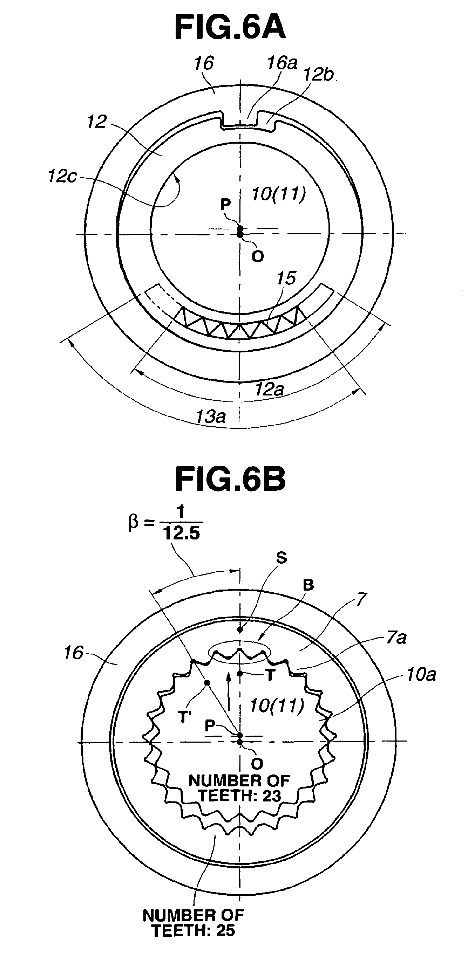

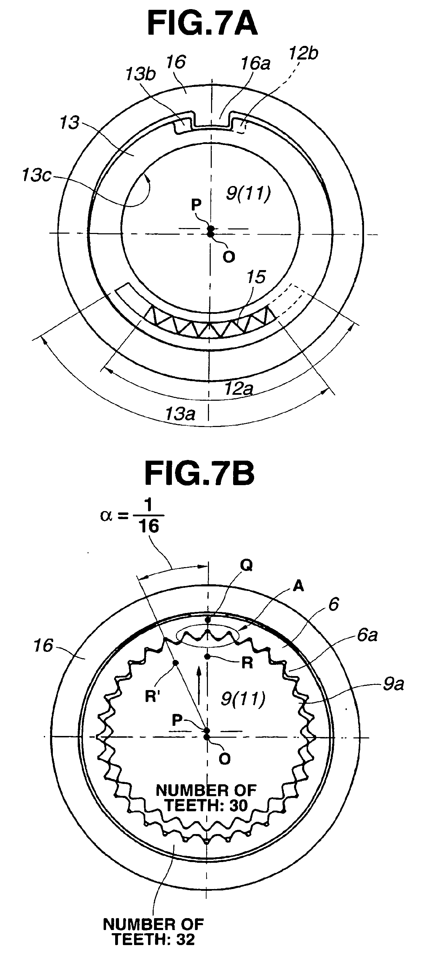

Planetary gear unit 11 is arranged between input gear 6 and output gear 7 in the axial direction of input gear 6 and output gear 7 such that cylindrical member 11a is fitted to an inside of annular rotary cam 14. Specifically, rotary cam 14 is constructed such that when rotary cam 14 is rotated, center P of planetary gear unit 11 is turned about the common rotation center of input gear 6 and output gear 7, i.e., center O of the root circle of first internal teeth 6a and the root circle of second internal teeth 7a, and first meshing portion A at which first external teeth 9a of planetary gear unit 11 is meshed with first internal teeth 6a of input gear 6 as shown in FIG. 7B and second meshing portion B at which second external teeth 10a of planetary gear unit 11 is meshed with second internal teeth 7a of output gear 7 as shown in FIG. 6B are displaced in a circumferential direction of planetary gear unit 11.

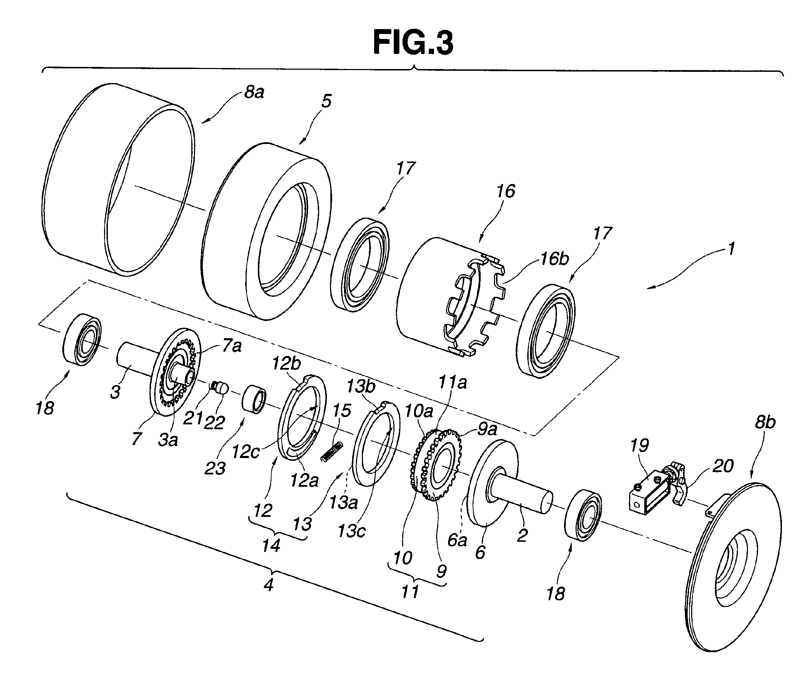

As shown in FIG. 3, rotary cam 14 includes ring-shaped first cam 12 and second cam 13. Specifically, first cam 12 and second cam 13 are in the form of annular plates with eccentric through-holes 12c and 13c, respectively. Eccentric through-holes 12c and 13c have centers that are offset from centers of first cam 12 and second cam 13 by a same amount. First cam 12 and second cam 13 are in axial alignment with each other such that eccentric through-holes 12c and 13c cooperate to form an eccentric cam hole of rotary cam 14. As shown in FIG. 6A and FIG. 7A, the centers of eccentric through-holes 12c and 13c are in alignment with center P of planetary gear unit 11, and the centers of first cam 12 and second cam 13 are in alignment with center O of the root circle of first internal teeth 6a and the root circle of second internal teeth 7a. First cam 12 and second cam 13 have arcuate holes 12a and 13a on opposed surfaces thereof that are opposed to each other in an axial direction of first cam 12 and second cam 13. Arcuate holes 12a and 13a extend in a circumferential direction of first cam 12 and second cam 13, respectively, and cooperate with each other to form a spring chamber in which single spring 15 as a biasing member for first and second cams 12 and 13 is accommodated. First cam 12 and second cam 13 are interposed between radially outer portions of input gear 6 and output gear 7 which are opposed to each other in the axial direction of input gear 6 and output gear 7, through large-diameter resin collars 28.

First cam 12 and second cam 13 are rotatively driven by motor 5 through drive shaft 16 to thereby turn planetary gear unit 11 about the common rotation center of input gear 6 and output gear 7, i.e., about center O of the root circle of first internal teeth 6a and the root circle of second internal teeth 7a, such that center P of planetary gear unit 11 trails an arcuate curve about center O.

Motor 5 is disposed on an outer circumferential side of housing 8 within housing 8. Motor 5 has a rotation axis about which motor 5 is rotatable. In this embodiment, motor 5 is arranged such that a rotation axis thereof is in parallel with input shaft 2 and output shaft 3. Motor 5 may be arranged coaxially with input shaft 2 and output shaft 3. Motor 5 includes ring-shaped stator 5b, coil 5a and ring-shaped rotor 5c.

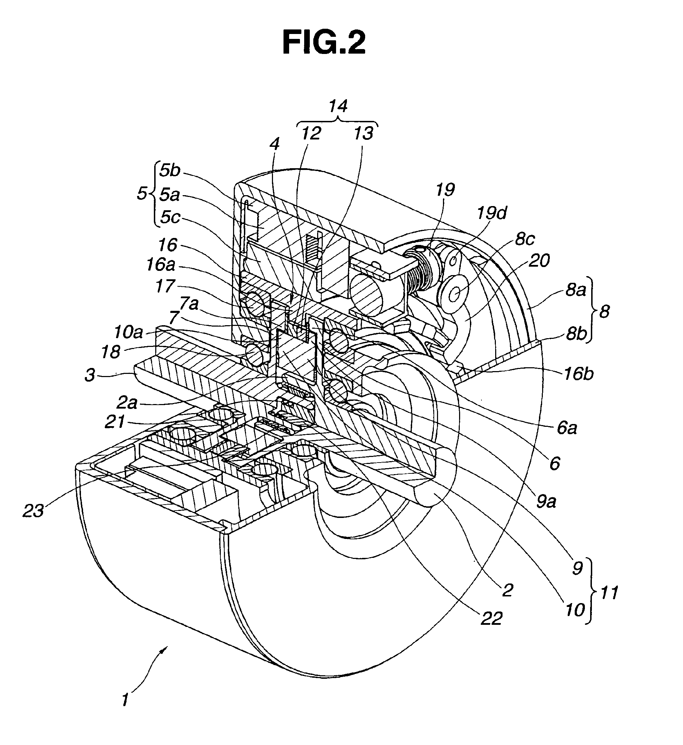

Drive shaft 16 is press-fitted into rotor 5c of motor 5. Drive shaft 16 is rotatably supported within housing 8 through a pair of bearings 17 that are disposed on an inside of axially opposed end portions of drive shaft 16. As shown in FIG. 3, drive shaft 16 has a hollow cylinder shape and a plurality of lock grooves 16b at one axial end portion thereof which are equidistantly spaced from each other in the circumferential direction of drive shaft 16. Drive shaft 16 acts as a lock holder that is engageable at lock grooves 16b with lock lever 20 of a lock mechanism to thereby be restrained from rotating as explained later. As shown in FIG. 1 and FIG. 2, drive shaft 16 is formed with key 16a that is disposed in an axially middle position on an inner circumferential surface of drive shaft 16. Key 16a is in the form of a projection projecting in a radially inward direction of drive shaft 16.

As shown in FIG. 3, first cam 12 and second cam 13 are formed with key ways 12b and 13b that are disposed on outer circumferential surfaces of first cam 12 and second cam 13, respectively. Key ways 12b and 13b are in the form of recessed portions extending in the circumferential direction of first cam 12 and second cam 13, respectively. As shown in FIG. 6A and FIG. 7A, key 16a is engaged with key ways 12b and 13b with a play. Drive shaft 16 and first and second cams 12 and 13 are coupled with each other through the engagement between key 16a and key ways 12b and 13b. A length of key ways 12b and 13b which extends in the circumferential direction of first cam 12 and second cam 13 is larger than a length of key 16a which extends in the circumferential direction of drive shaft 16. With this construction, first cam 12 and second cam 13 are biased in opposite rotational directions by a spring force of spring 15, thereby causing an offset in phase angle between first cam 12 and second cam 13 and providing an increase in eccentric amount of rotary cam 14 with respect to input gear 6 and output gear 7. This allows first external teeth 9a and second external teeth 10a of planetary gear unit 11 to press onto first internal teeth 6a of input gear 6 and second internal teeth 7a of output gear 7, respectively, thereby eliminating backlash at first meshing portion A and second meshing portion B. On the other hand, when drive shaft 16 is driven by motor 5 to rotate in one direction, key 16a of drive shaft 16 is moved in key ways 12b and 13b and presses onto one of opposite end surfaces of key way 12b which are opposed to each other in the circumferential direction of first cam 12, or one of opposite end surfaces of key way 13b which are opposed to each other in the circumferential direction of second cam 13. This causes first cam 12 and second cam 13 to rotate such that key way 12b and key way 13b are brought into an overlapping position in which key way 12b and key way 13b are in alignment with each other. As a result, the eccentric amount of rotary cam 14 with respect to input gear 6 and output gear 7 is reduced to thereby generate backlash at first meshing portion A and second meshing portion B and allow smooth displacement of first meshing portion A and second meshing portion B in the circumferential direction of input and output gears 6, 7 and planetary gear unit 11. For the purpose of performing the above operation, there is generated a clearance between the outer circumferential surfaces of first cam 12 and second cam 13 and the inner circumferential surface of drive shaft 16 which allows the offset in phase angle between first cam 12 and second cam 13.

First internal teeth 6a having the number of teeth of 32 and first external teeth 9a having the number of teeth of 30 constitute first meshing portion A. On the other hand, second internal teeth 7a having the number of teeth of 25 and second external teeth 10a having the number of teeth of 23 constitute second meshing portion B. Thus, output gear 7 and second planetary gear 10 which have second meshing portion B therebetween are smaller in number of teeth than input gear 6 and first planetary gear 9 which have first meshing portion A therebetween. First speed reducing ratio G1 between first internal teeth 6a and first external teeth 9a is set to a value that is different from a value of second speed reducing ratio G2 between second internal teeth 7a and second external teeth 10a. That is, first speed reducing ratio G1 is calculated as a ratio of first internal teeth 6a to the difference in number of teeth between first internal teeth 6a and first external teeth 9a, i.e., 32/(32-30)= 16. In contrast, second speed reducing ratio G2 is calculated as a ratio of second internal teeth 7a to the difference in number of teeth between second internal teeth 7a and second external teeth 10a, i.e., 25/(25-23) = = 12.5.

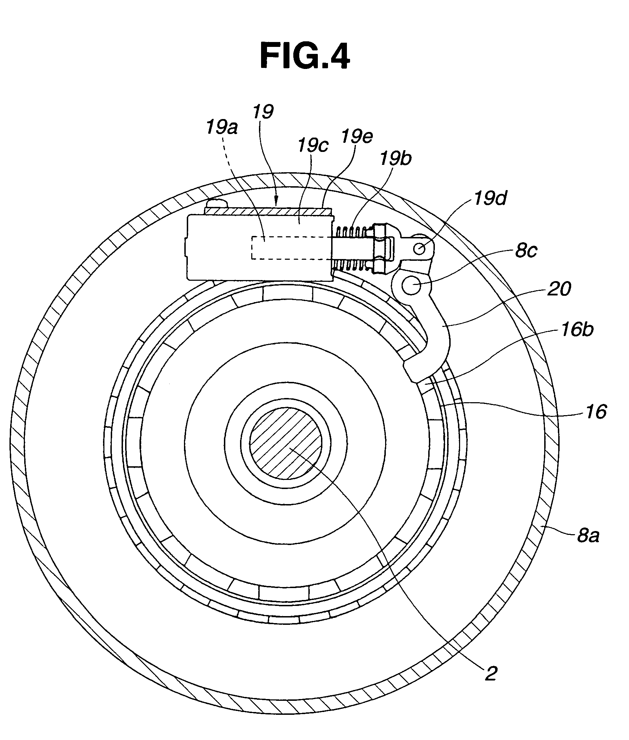

The lock mechanism acts to lock the rotational motion of drive shaft 16. In this embodiment, the lock mechanism includes solenoid 19 and lock lever 20 that is operable in association with solenoid 19. As shown in FIG. 4, solenoid 19 is disposed within housing 8 in perpendicular to input shaft 2 and output shaft 3. Solenoid 19 includes casing 19e, rod 19a disposed within casing 19e, spring 19b that biases rod 19a in such a direction as to project from casing 19e, and coil 19c that is energized to generate an electromagnetic force acting to attract rod 19a into casing 19e against a biasing force of spring 19b. Lock lever 20 is pivotally supported within housing 8 through shaft 8c that is integrally formed with cover 8b. Lock lever 20 has one end portion that is pivotally connected with a tip end portion of rod 19a through pin 19d. The other end of lock lever 20 is bent along a radial direction of drive shaft 16 so as to be engageable with lock grooves 16b of drive shaft 16 and restrain the rotation of drive shaft 16.

As shown in FIG. 1, input gear 6 and output gear 7 have outer sleeve 2a and inner sleeve 3a which are formed on opposed axial end surfaces of input gear 6 and output gear 7, respectively. Outer sleeve 2a and inner sleeve 3a are integrally formed with input gear 6 and output gear 7, respectively. Outer sleeve 2a extends from a central portion of the axial end surface of input gear 6 on an outside of inner sleeve 3a of output gear 7 in the axial direction of input gear 6. Inner sleeve 3a extends from a central portion of the axial end surface of output gear 7 into outer sleeve 2a of input gear 6 in the axial direction of output gear 7. Outer sleeve 2a and inner sleeve 3a are relatively rotatable through needle bearing 23 that is disposed in a radial clearance between outer sleeve 2a and inner sleeve 3a. Biasing member 21 and slide 22 that is biased by biasing member 21 are disposed within an inside space of inner sleeve 3a. Biasing member 21 biases input gear 6 and output gear 7 in opposite directions so as to separate from each other. In this embodiment, a coil spring is used as biasing member 21. Slide 22 has small-diameter portion 22a that is fitted into biasing member 21, and a spherical tip end portion that is in point contact with the axial end surface of input gear 6.

An operation of steering apparatus 1 will be explained hereinafter. When the steering wheel is rotated, input shaft 2 is rotated. At this time, if motor 5 is not driven, rotary cam 14 is not rotated and center P of planetary gear unit 11 is prevented from being displaced. Therefore, along with the rotation of input shaft 2, planetary gear unit 11 is rotated about center P without turning about center O of the root circle of first internal teeth 6a and the root circle of second internal teeth 7a. Output gear 7 is allowed to rotate by the rotation of planetary gear unit 11. That is, the rotation of input shaft 2 is directly transmitted to output shaft 3 without change in ratio therebetween. In contrast, when motor 5 is energized to rotate rotor 5c and drive shaft 16, first cam 12 and second cam 13 of rotary cam 14 are allowed to rotate by the engagement between key 16a of drive shaft 16 and key ways 12b and 13b of first cam 12 and second cam 13. Since the centers of eccentric through-holes 12c and 13c of first cam 12 and second cam 13 which are in alignment with center P of planetary gear unit 11 are offset from the centers of first cam 12 and second cam 13 which are in alignment with center O of the root circle of first internal teeth 6a and the root circle of second internal teeth 7a, meshing portion A between first external teeth 9a of first planetary gear 9 of planetary gear unit 11 and first internal teeth 6a of input gear 6 and meshing portion B between second external teeth 10a of second planetary gear 10 of planetary gear unit 11 and second internal teeth 7a of output gear 7 are displaced in the circumferential direction of planetary gear unit 11, input gear 6 and output gear 7 along with the rotation of rotary cam 14.

FIG. 6A and FIG. 6B show that center P of planetary gear unit 11 is offset upwardly relative to center O of the root circle of second internal teeth 7a of output gear 7, so that second planetary gear 10 is meshed with an upper portion of second internal teeth 7a at second meshing portion B. FIG. 7A and FIG. 7B show that center P of planetary gear unit 11 is offset upwardly relative to center O of the root circle of first internal teeth 6a of input gear 6, so that first planetary gear 9 is meshed with an upper portion of first internal teeth 6a at first meshing portion A. If first meshing portion A between input gear 6 and planetary gear unit 11 as shown in FIG. 7B and second meshing portion B between output gear 7 and planetary gear unit 11 as shown in FIG. 6B which are placed in a same circumferential position, are rotated in a clockwise direction to make one rotation, as viewed from the side of first planetary gear 9 and second planetary gear 10, first planetary gear 9 and second planetary gear 10 are slightly rotated relative to input gear 6 and output gear 7 respectively in a counterclockwise direction reverse to the turning direction of planetary gear unit 11 by two teeth corresponding to the difference in number of teeth between input gear 6 and first planetary gear 9 and the difference in number of teeth between output gear 7 and second planetary gear 10. This is because the number of teeth of first planetary gear 9 is smaller than the number of teeth of input gear 6 and the number of teeth of second planetary gear 10 is smaller than the number of teeth of output gear 7. In other words, input gear 6 is slightly rotated relative to first planetary gear 9 in the clockwise direction that is the same as the turning direction of planetary gear unit 11, by two teeth corresponding to the difference in number of teeth between input gear 6 and first planetary gear 9, because the number of teeth of input gear 6 is larger than the number of teeth of first planetary gear 9. At the same time, output gear 7 is slightly rotated relative to second planetary gear 10 in the clockwise direction that is the same as the turning direction of planetary gear unit 11, by two teeth corresponding to the difference in number of teeth between output gear 7 and second planetary gear 10, because the number of teeth of output gear 7 is larger than the number of teeth of second planetary gear 10. That is, first speed reducing ratio G1 between first internal teeth 6a and first external teeth 9a is set to 16 and second speed reducing ratio G2 between second internal teeth 7a and second external teeth 10a is set to 12.5, as described above. Therefore, when meshing portions A and B make one turn in the clockwise direction, input gear 6 is rotated to advance relative to planetary gear unit 11 in the clockwise direction by amount α (1/16) as shown in FIG. 7B, and output gear 7 is rotated to advance relative to planetary gear unit 11 in the clockwise direction by amount β (1/12.5) as shown in FIG. 6B. Since there is the difference between the amount of rotation of input gear 6 relative to planetary gear unit 11 and the amount of rotation of output gear 7 relative to planetary gear unit 11, the amount of rotation of output gear 7 relative to input gear 6 is given by the difference in the amount of rotation therebetween.

Specifically, as shown in FIG. 7B, when meshing portions A and B make one turn in the clockwise direction, point R on first planetary gear 9 which is located at the same circumferential position as point Q on input gear 6 is moved to a circumferential position of point R'. The position of point R' is offset from point R by two teeth (32-30=2) corresponding to the difference in number of teeth between input gear 6 and first planetary gear 9, i.e., by the rotation amount (angle) α shown in FIG. 7B. From the other view, the position of point R' is equal to such a position where first planetary gear 9 is turned in the counterclockwise direction with respect to input gear 6 by the two teeth, i.e., by the rotation amount α. On the other hand, as shown in FIG. 6B, when meshing portions A and B make one turn in the clockwise direction, point S on output gear 7 which corresponds to point Q on input gear 6 is moved to a circumferential position of point T'. The position of point T' is offset from point T by two teeth (25-23=2) corresponding to the difference in number of teeth between output gear 7 and second planetary gear 10, i.e., by the rotation amount (angle) β shown in FIG. 6B. From the other view, the position of point T' is equal to such a position where second planetary gear 10 is turned in the counterclockwise direction with respect to output gear 7 by the two teeth, i.e., by the rotation amount β. Since first planetary gear 9 and second planetary gear 10 are arranged on common cylindrical member 11a and constitute planetary gear unit 11, point R' on first planetary gear 9 and point T' on second planetary gear 10 are located in the same circumferential position on planetary gear unit 11. Accordingly, the one turn of planetary gear unit 11 in the clockwise direction is equivalent to the case where input gear 6 is rotated in the clockwise direction with respect to planetary gear unit 11 by the rotation amount α, and output gear 7 is rotated in the clockwise direction with respect to planetary gear unit 11 by the rotation amount β. The amount of rotation of output gear 7 relative to input gear 6 is calculated by the following expression: β - α = (1/12.5) - (1/16) = (1/57). That is, output gear 7 is rotated relative to input gear 6 in the clockwise direction by the rotation amount of (1/57).

This means that the rotation number of output gear 7 relative to the rotation number of input gear 6 is increased when planetary gear unit 11 makes one turn in the clockwise direction. The rate of increase in the rotation number of output gear 7 is varied by increasing and decreasing the rotation number of motor 5. Further, if a direction of rotation of motor 5 is reversed, the rotation number of output gear 7 relative to the rotation number of input gear 6 is reduced. The rate of reduction in the rotation number of output gear 7 is also varied by increasing and decreasing the rotation number of motor 5.

On the other hand, when output gear 7 is rotatively driven through output shaft 3 by an external force applied to tires, the rotation force of output gear 7 is applied to planetary gear unit 11. However, even in this state, rotary cam 14 is prevented from being conversely driven through planetary gear unit 11 owing to a relationship between inertia of motor 5, rotation speed reducing ratio and cam angle of rotary cam 14. Further, it is possible to suppress failure in meshing engagement between output gear 7 and planetary gear unit 11 owing to an enhanced rigidity of the teeth. As a result, the rotation force caused by the external force is not transmitted to first cam 12 and second cam 13 of rotary cam 14, and therefore, driving operation of motor 5 is prevented from being adversely affected by the external force.

In a case where motor 5 is not driven due to engine stop or failure in electric system, solenoid 19 is de-energized. Rod 19a is urged to project by the biasing force of spring 19b so that the tip end of lock lever 20 comes into engagement with lock groove 16b of drive shaft 16. With the engagement between lock lever 20 and lock groove 16b, rotor 5c of motor 5 is locked to thereby directly transmit the rotation of input gear 6 to output gear 7 without change in ratio therebetween via planetary gear unit 11. Accordingly, input gear 6 and output gear 7 are rotated in the same direction at the speed ratio of about 1:1, specifically, 1:0.98 in this embodiment.

In the first embodiment, the rotation number of output gear 7 relative to the rotation number of input gear 6 can be increased and reduced by rotating rotary cam 14 in a positive direction and a reverse direction so as to increase and decrease the rotation amount of rotary cam 14 by motor 5.

Further, in the first embodiment, first cam 12 and second cam 13 of rotary cam 14 are rotatively driven by drive shaft 16, while being biased in the opposite directions by spring 15. With this construction, it is possible to avoid occurrence backlash between input gear 6 and first planetary gear 9 and between output gear 7 and second planetary gear 10.

Furthermore, in the first embodiment, when drive shaft 16 is restrained from rotating by the lock mechanism, a ratio between the rotation number of input gear 6 and the rotation number of output gear 7 becomes about 1:1. In this case, it is possible to make no change in increase and reduction in the rotation speed ratio similarly to the case where input shaft 6 and output shaft 7 are directly coupled to each other.

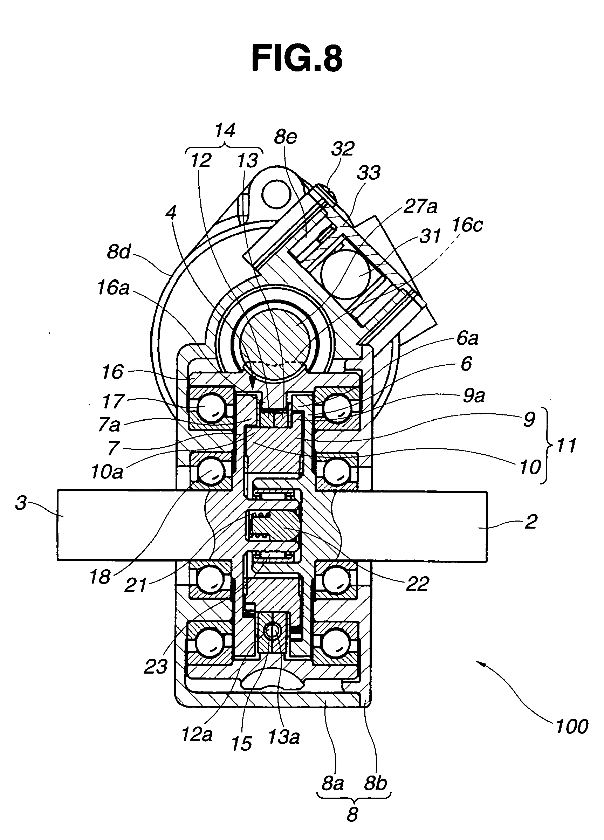

Next, a second embodiment of the present invention is explained with reference to FIG. 8 to FIG. 10. The second embodiment differs from the first embodiment in arrangement of the motor and the lock mechanism. Like reference numerals denote like parts, and therefore, detailed explanations therefor are omitted.

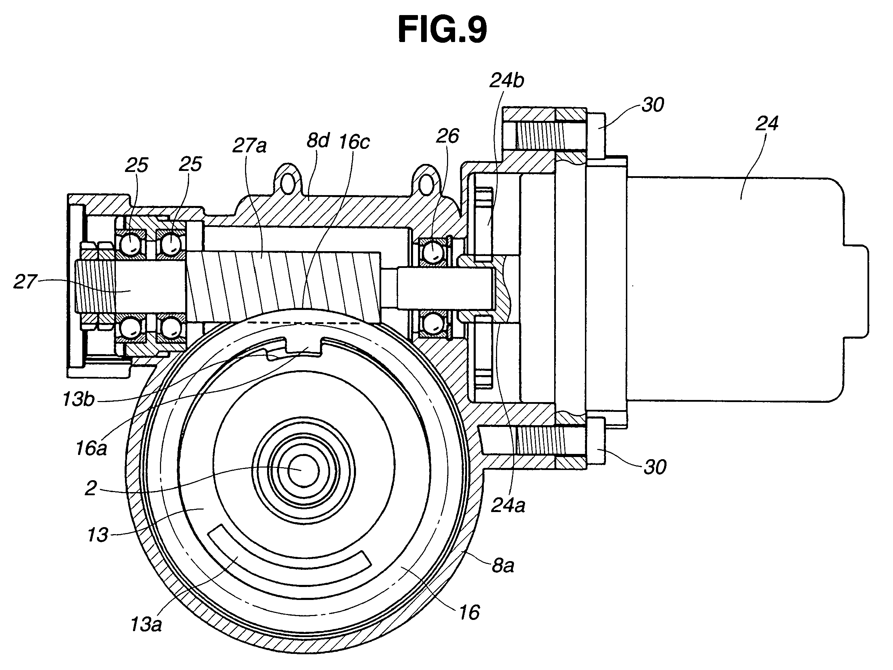

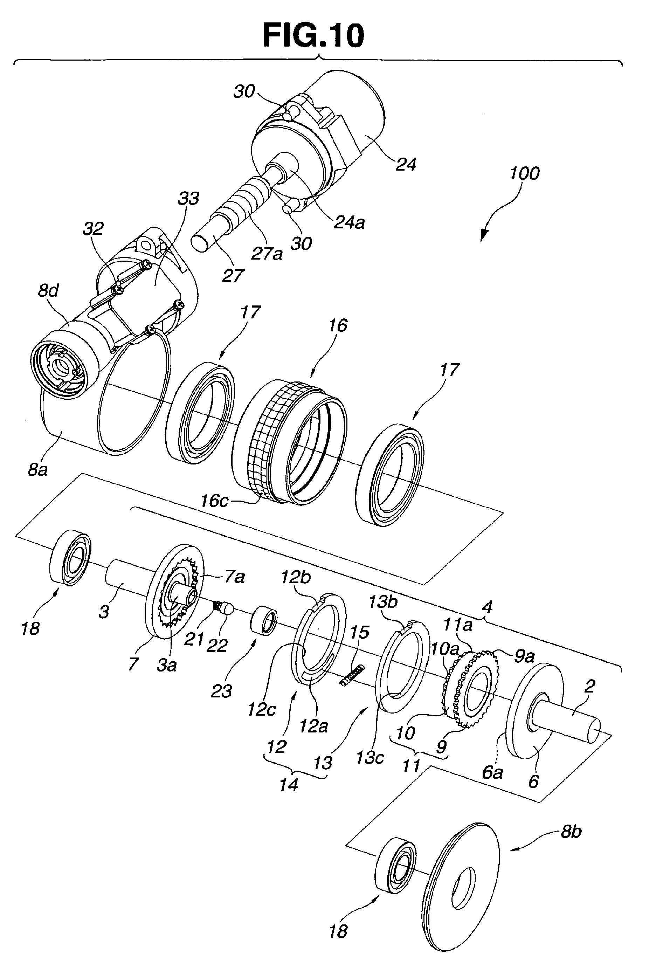

As shown in FIG. 9 and FIG. 10, steering apparatus 100 of the second embodiment includes motor 24 that is disposed on a radial outside of rotation speed increasing/reducing mechanism 4. Motor 24 is arranged such that a rotation axis thereof is perpendicular to input shaft 2 and output shaft 3. Specifically, as shown in FIG. 10, second housing 8d is integrally formed with housing 8a. As shown in FIG. 9, motor 24 is connected with second housing 8d through bolts 30. Worm shaft 27 is rotatably supported within second housing 8d through bearings 25, 26. Worm shaft 27 has one end that is press-fitted into output shaft 24a of motor 24, and worm 27a on an outer circumferential surface thereof. Worm 27a is engaged with worm wheel 16c that is formed on the outer circumferential surface of drive shaft 16.

The lock mechanism includes lock plate 24b that is connected with output shaft 24a of motor 24 as shown in FIG. 9. Lock plate 24b has a plurality of lock grooves on an outer circumferential surface. The lock mechanism further includes solenoid 31 that is disposed within second housing 8d in the direction perpendicular to input shaft 2 and output shaft 3 as shown in FIG. 8. Solenoid 31 is accommodated within recessed portion 8e that is formed in second housing 8d and closed with cover 33 by using screws 32. Solenoid 31 includes a rod that is biased by a spring to project parallel to an axis of worm shaft 27 and come into engagement with lock grooves of lock plate 24b.
Similar to solenoid 19 of the first embodiment, in the energized state of solenoid 31, the rod is attracted inside a coil against the biasing force of the spring and kept in disengagement from the lock grooves of lock plate 24b. At this time, drive shaft 16 is in the unlocked state. In the de-energized state of solenoid 31, the rod is urged to project into the lock grooves of lock plate 24b by the biasing force of the spring and kept in engagement with the lock grooves of lock plate 24b. At this time, drive shaft 16 is in the locked state. Accordingly, in the lock mechanism of the second embodiment as shown in FIG. 10, solenoid 19 and lock grooves 16b of drive shaft 16 as described in the first embodiment are omitted.

The second embodiment can perform the same function and effect as those of the first embodiment.

The rotary cam is not limited to the first and second embodiments in which the rotary cam is constituted of the first cam, the second cam and the spring. The rotary cam may be a single rotary cam that has a same shape as the first cam or the second cam. Further, the first speed reducing ratio G1 between the first internal teeth and the first external teeth is not limited to the first and second embodiments in which the first speed reducing ratio G1 is larger than the second speed reducing ratio G2 between the second internal teeth and the second external teeth. The first speed reducing ratio G1 can be smaller than the second speed reducing ratio G2.

This application is based on a prior Japanese Patent Application No. 2007-310060 filed on November 30, 2007. The entire contents of the Japanese Patent Application No. 2007-310060 are hereby incorporated by reference.

Although the invention has been described above by reference to certain embodiments of the invention, the invention is not limited to the embodiments described above. Further modifications and variations of the embodiments described above will occur to those skilled in the art in light of the above teachings. The scope of the invention is defined with reference to the following claims.

## Claims

1. A variable ratio steering apparatus for a vehicle including a steering wheel and a steering mechanism with a pinion shaft, the variable ratio steering apparatus comprising:
an input shaft (2) adapted to be connected to the steering wheel,
an output shaft (3) arranged coaxially with the input shaft, the output shaft being adapted to be connected to the pinion shaft of the steering mechanism,
a rotation speed increasing/reducing mechanism (4) that acts to vary a rotation number of the output shaft (3) with respect to a rotation number of the input shaft (2), the rotation speed increasing/reducing mechanism being disposed between an axial end portion of the input shaft (2) and an axial end portion of the output shaft (3) which are opposed to each other in an axial direction of the input shaft and the output shaft, the rotation speed increasing/reducing mechanism comprising:
an input gear (6) that is disposed on the axial end portion of the input shaft (2) and formed with first internal teeth (6a) on an inner circumferential surface of the input gear;
an output gear (7) that is disposed on the axial end portion of the output shaft (3) and formed with second internal teeth (7a) on an inner circumferential surface of the output gear, the output gear and the input gear having a common rotation center (O),
a first planetary gear (9) formed with first external teeth (9a) that are meshed with the first internal teeth (6a) to form a first meshing portion (A), the first external teeth (9a) being smaller in number of teeth than the first internal teeth (6a) so as to provide a first speed reducing ratio between the first external teeth and the first internal teeth,
a second planetary gear (10) formed with second external teeth (10a) that are meshed with the second internal teeth (7a) to form a second meshing portion (B), the second external teeth (10a) being smaller in number of teeth than the second internal teeth (7a) so as to provide a second speed reducing ratio between the second external teeth and the second internal teeth, the second speed reducing ratio being set to a value different from a value of the first speed reducing ratio,
a cylindrical member (11a) through which the first planetary gear (9) and the second planetary gear (10) are integrally connected to each other; and
an annular rotary cam (14) disposed between the first planetary gear (9) and the second planetary gear (10) and formed with an eccentric cam hole that has a center offset from the common rotation center (O) of the input gear (6) and the output gear (7), the cylindrical member (11a) being fitted into the rotary cam (14) through the eccentric cam hole,
a motor (5; 24) that is disposed on a radial outside of the rotation speed increasing/reducing mechanism (4) and controls the rotation speed increasing/reducing mechanism; and
a drive shaft (16) that is rotatively driven by the motor (5), the drive shaft being formed into a hollow cylinder shape and surrounding the rotation speed increasing/reducing mechanism (4),
wherein the rotary cam (14) is rotatively driven by the motor (5) through the drive shaft (16) to thereby turn the first planetary gear (9) and the second planetary gear (10) about the common rotation center (O) of the input gear and the output gear, so that the first meshing portion (A) and the second meshing portion (B) are allowed to displace in a circumferential direction of the first planetary gear and the second planetary gear.

2. The variable ratio steering apparatus as claimed in claim 1, wherein the rotary cam (14) comprises a pair of cams (12, 13) and a biasing member (15) that biases the pair of cams in opposite rotational directions, the pair of cams and the drive shaft (16) being coupled with each other through engagement between a recessed portion and a projection, one of the recessed portion and the projection being formed on an outer circumferential surface of each of the pair of cams (12, 13), the other of the recessed portion and the projection being formed on an inner circumferential surface of the drive shaft (16).

3. The variable ratio steering apparatus as claimed in claim 1 or 2, further comprising a lock mechanism that acts to restrain a rotational motion of the drive shaft (16).

4. The variable ratio steering apparatus as claimed in one of claims 1-3, wherein the number of teeth of the first external teeth (9a) is smaller by one or two than the number of teeth of the first internal teeth (6a), and the number of teeth of the second external teeth (10a) is smaller by one or two than the number of teeth of the second internal teeth (7a).

5. The variable ratio steering apparatus as claimed in one of claims 1-4, wherein the motor (5) is arranged such that a rotation axis thereof is in parallel with the input shaft (2) and the output shaft (3).

6. The variable ratio steering apparatus as claimed in claim 5, wherein the drive shaft (16) is fitted into the motor (5) and disposed between the motor and the rotation speed increasing/reducing mechanism (4) in a radial direction thereof.

7. The variable ratio steering apparatus as claimed in one of claims 1-4, wherein the motor (24) is arranged such that a rotation axis thereof is perpendicular to the input shaft (2) and the output shaft (3).

8. The variable ratio steering apparatus as claimed in claim 2, wherein each of the pair of cams (12, 13) has the recessed portion (12b, 13b) and the drive shaft (16) has the projection (16a), the recessed portion and the projection extend in the circumferential direction of the cam (12, 13) and the drive shaft (16) such that a length of the recessed portion is larger than a length of the projection, and the projection is circumferentially moved in the recessed portion to bring the recessed portions of the pair of cams (12, 13) into alignment with each other when the drive shaft (16) is rotated.

9. The variable ratio steering apparatus as claimed in one of claims 3-6 and 8, wherein the lock mechanism comprises a solenoid (19), and lock grooves (16b) that are formed on the drive shaft (16) in a circumferential direction of the drive shaft and engageable with a member (20) that is operated by the solenoid.

10. The variable ratio steering apparatus as claimed in one of claims 3, 4, 7 and 8, wherein the lock mechanism comprises a solenoid (31), and a lock plate (24b) that is provided on the motor (24) and formed with lock grooves engageable with a member that is operated by the solenoid.

11. The variable ratio steering apparatus as claimed in one of claims 3, 4, 7, 8 and 10, wherein the drive shaft (16) comprises a worm wheel (16c) that is formed on an outer circumferential surface of the drive shaft, and the motor (24) comprises a worm shaft (27) engaged with the worm wheel of the drive shaft.
